# EUROPEAN PATENT SPECIFICATION

(11) **EP 4 558 561 B1**
(45) Date of publication and mention of the grant of the patent: **04.03.2026**
(21) Application number: 23742078.1
(22) Date of filing: 17.07.2023
(51) Int. Cl.: C08L 51/04, C08K 5/13, C08L 25/06, C08J 11/04, C08F 279/02, B29B 17/00

(54) **RECYCLED, THERMALLY STABLE POLYSTYRENE COMPOSITION AND PROCESS FOR PROVIDING SUPERIOR THERMAL STABILITY IN THE MECHANICAL RECYCLING OF POLYSTYRENE**
REZYKLIERTE, THERMISCH STABILE POLYSTYROLZUSAMMENSETZUNG UND VERFAHREN ZUR BEREITSTELLUNG VON ERHÖHTER THERMISCHER STABILITÄT BEI DER MECHANISCHEN WIEDERVERWERTUNG VON POLYSTYROL
COMPOSITION DE POLYSTYRÈNE RECYCLÉ THERMIQUEMENT STABLE ET PROCÉDÉ DESTINÉ À ASSURER UNE STABILITÉ THERMIQUE SUPÉRIEURE LORS DU RECYCLAGE MÉCANIQUE DU POLYSTYRÈNE

(30) Priority: 19.07.2022 EP 22185844
(43) Date of publication of application: 28.05.2025
(73) Proprietor: INEOS Styrolution Group GmbH, 60325 Frankfurt (DE)
(72) Inventor: NIESSNER, Norbert, 67159 Friedelsheim (DE); MOORS, Rainer, 76726 Germersheim (DE); COCHRAN, Thomas W., Wilmington, Illinois 60481 (US); EISENTRÄGER, Frank, 1134 Vufflens-le-Château (CH)
(74) Representative: Jacobi, Markus Alexander
(86) International application number: PCT/EP2023/069768
(87) International publication number: WO 2024/017825

(56) References cited:
- EP-A1- 3 858 907
- DE-A1- 4 414 043
- US-A1- 2014 107 307

## Description

The present invention relates to a recycled, thermally stable polystyrene composition and a process for providing superior thermal stability in the mechanical recycling of polystyrene. Further, the invention deals with a process for the preparation of the recycled, thermally stable polystyrene composition. The recycled, thermally stable polystyrene composition P comprises and emits reduced amounts of residual monomers compared to conventional polystyrene (PS) compositions.

Products made from or incorporating plastic are part of almost any work place or home environment. Most of these plastics are virgin polymers that are produced based on petroleum. In the recent years, there has been a strong movement to recycle and reuse petrochemical products, such as plastics, in addition to metallic material. Recycling plastic from waste plastic materials has a variety of benefits compared to producing virgin plastic from petroleum, e.g. less energy is required, the need for disposing waste material is reduced, and the use of limited geological resources, such as petroleum, is reduced. Typically, waste plastic materials include post-consumer and post-industrial waste materials and plastic scrap. Some of the most common polymer types in waste plastic materials from recycled goods are high impact polystyrene (HIPS), acrylonitrile-butadiene-styrene copolymers (ABS), polypropylene (PP) and polycarbonate (PC).

The quest for polystyrene compositions with low residual monomer content requires grades that do not emit monomers, e.g. styrene, due to degradation of the polystyrene during processing. Processing of polystyrene compositions often leads to polystyrene degradation due to a combination of mechanical stress, thermolysis and oxidation. Elevated temperatures promote the generation of styrene monomer considerably. The ceiling behavior of commercial polystyrene materials typically leads to residual monomer contents of about 400 ppm styrene at 220°C and 1500 ppm at 260°C. It was previously reported that thermally initiated polystyrene is more stable compared to radically initiated polystyrene (M. Singh, U.S. Naudi, J. Polym. Sci. Polym. Lett. 17, 121, 1979).

So-called "weak links" in the polymer chain are known to play an important role in the initiation of the thermal degradation of polystyrene. It is also known that the initial rate of degradation is a function of the initiation mechanism (anionic versus radical) and, for radically initiated polystyrene, the particular initiator. Graeme Moad, David H. Solomon, and R. lan Willing (Division of Applied Organic Chemistry, Melbourne, Australia) have reported on the nature of the initiator-derived end groups in polystyrene prepared with benzoyl peroxide as initiator and speculated on the possible role of these end groups in the thermal and photochemical degradation of that polymer (Macromolecules 21, 855-857 (1988)).

Examination of the NMR spectra of the degraded polymers showed that after only 10 minutes all resonances due to secondary benzoate end groups have disappeared while the primary benzoate resonances appear essentially unchanged both in appearance and in relative intensity. Thus, the end groups formed by head addition to monomer, transfer to initiator, or primary radical termination are thermally much less stable than those formed from normal tail addition to monomer.

However, no information is given how to substitute benzoyl-peroxide by initiation methods that create superior thermal stability. Furthermore, methods for improving the properties of polystyrene compositions for their repeated use in post-consumer recycled food packaging with respect to the content of residual monomers are hitherto unknown.

DE 44 14043 A1 relates to the stabilization of polystyrene with phenolic stabilizers and discloses molding compositions containing, in addition to polystyrene as the essential constituent, less than 250 ppm styrene and 0.05-0.5% by weight of at least one phenolic antioxidant. DE 44 14043 A1 does not deal with compositions comprising recycled polystyrene.

US 2014/107307 A1 relates to the recycling of styrenic resins comprising between approximately 1 weight percent and 9 weight percent post-consumer recycle polystyrene (PCR PS), wherein the styrenic resin has a melt flow rate (MFR) of less than approximately 2.0 g/10 min per ASTM D-1238-10 and an Mz+1 of at least approximately 700,000.

In order to use recycled polystyrene compositions in e.g. food packaging, it is inevitable to minimize the residual styrene content in the recycled polystyrene composition, since styrenic monomers can migrate from the packaging material, e.g. into food. Recycled polystyrene compositions are prone to comprise and/or emit increased amounts of residual styrenic monomers due to the repeated thermal and/or mechanical processing they undergo during the recycling process.

It was surprisingly found that thermally stable polystyrene compositions P are obtained, if recycled polystyrene is used which is (or was) prepared by a thermally initiated and/or 1,1-bis(tert-butylperoxy)-3,3,5-trimethylcyclohexane initiated radical polymerization and is further admixed with at least one sterically hindered phenolic antioxidant. Moreover, it was found that the processing properties, such as viscosity, can be improved by the present invention.

### Description of the invention

The present invention is directed to a recycled, thermally stable polystyrene composition P, comprising (or consisting of):
A: at least one recycled polystyrene composition as component A, comprising
   A-1: at least one recycled polystyrene as component A-1, wherein the polystyrene A-1 is obtained by a thermally initiated and/or 1,1-bis(tert-butylperoxy)-3,3,5-trimethylcyclohexane initiated radical polymerization;
   A-2: optionally at least one impact modifying polymer as component A-2, comprising polymer particles derived from at least one monomer selected from styrene, 1,3-butadiene, isoprene, acrylonitrile, ethylene, C₃ to C₁₂ alpha-olefins, and combinations thereof; and
   A-3: optionally at least one additive as component A-3;
B: at least one sterically hindered phenolic antioxidant as component B; and
C: optionally at least one additive as component C,
wherein the recycled polystyrene is obtained from waste plastic material.

According to the invention, component A-1 can e.g. be a polystyrene component that was originally obtained (long time ago) by a thermally initiated and/or 1,1-bis(tert-butylperoxy)-3,3,5-trimethylcyclohexane initiated radical polymerization, was used for some time in a polymer product, and then is re-used in the new process for preparing a recycled, thermally stable polystyrene composition P.

Preferably, the recycled, thermally stable polystyrene composition P comprises (or consists of):
A: 95 to 99.9 % by weight, based on the recycled, thermally stable polystyrene composition P, of at least one recycled polystyrene composition as component A;
B: 0.1 to 1 % by weight, based on the recycled, thermally stable polystyrene composition P, of at least one sterically hindered phenolic antioxidant as component B; and
C: 0 to 4 % by weight, based on the recycled, thermally stable polystyrene composition P, of at least one additive as component C.

In one embodiment of the invention, the recycled, thermally stable polystyrene composition P preferably comprises (or consists of):
A: 97.5 to 99.9 % by weight, based on the recycled, thermally stable polystyrene composition P, of at least one recycled polystyrene composition as component A, comprising:
   A-1: at least one recycled polystyrene as component A-1, wherein the polystyrene A-1 is prepared by a thermally initiated radical polymerization;
   A-2: at least one impact modifying polymer as component A-2, comprising polymer particles derived from at least one monomer selected from styrene, 1,3-butadiene, isoprene, acrylonitrile, ethylene, C₃ to C₁₂ alpha-olefins, and combinations thereof; and
   A-3: optionally at least one additive as component A-3;
B: 0.1 to 0.5 % by weight, based on the recycled, thermally stable polystyrene composition P, of at least one sterically hindered phenolic antioxidant as component B, selected from octadecyl 3-(3,5-di-tert-butyl-4-hydroxyphenyl)propionate (CAS-No.: 2082-79-3, Irganox^{®} 1076), 2,6-di-tert-butyl-p-cresol (CAS-No. 87-97-8, Kerobit^{®} TBK), and mixtures thereof; and
C: 0 to 2 % by weight, based on the recycled, thermally stable polystyrene composition P, of at least one additive as component C.

In terms of the present invention, recycled polystyrene means a polymer from the type polystyrene, including general purpose polystyrene (GPPS) and high impact polystyrene (HIPS), that is obtained from waste plastic material, in particular from recycled goods, typically in a recycling and separation process.

In terms of the present invention or "recycled goods" means goods, such as packaging materials, in particular food packaging materials, household appliance, machinery, sport equipment, consumer electronics, and automobiles.

In the context of this invention, a recycled polymer (such as the recycled polystyrene A) is defined as a polymer whose origin comes from polymer articles that have been recycled and reprocessed at the end of their service life. The processing to obtain the recycled polymer can be done by different processes known in the industry, see e.g. Köhnlechner, R. (2014): "Erzeugung sauberer PS- und ABS-Fraktionen aus gemischtem Elektronikschrott", in D. G. Karl J. Thomé-Kozmiensky (Ed.), Recycling und Rohstoffe, Vol. 7 (pp. 379-400), TK Verlag Karl Thomé-Kozmiensky, Neuruppin.

The recycled polystyrenes A are characterized in that they have been processed to an article (e.g. an molded article) at least once after their production as primary polymers (virgin polymers). Thus, the recycled polystyrenes A typically differ from the primary polymers (virgin polymers) in particular in that the recycled polymers have undergone at least one separate thermal compounding step, such as an extrusion process or an injection molding process, before being used in the recycled, thermally stable polystyrene composition P according to the invention.

Thus, in contrast to primary polymers (virgin polymers), the recycled polystyrenes A typically have undergone at least one thermal compounding step at a temperature above the melting temperature of the recycled polystyrene A, for example at a temperature in a range from 180°C to 320°C, often in a range from 200°C to 300°C, for example in a range from 220°C to 280°C, determined according to ISO 294, and/or have been mechanically stressed by mixing, in particular by shear forces, for example in an extruder, e.g. single-screw or twin-screw extruder, or in other conventional plasticizing devices, such as Brabender mixers or Banbury mixers.

In addition, the recycled polystyrene A may have been subjected to other processing steps in which the recycled polymer was mechanically stressed at temperatures below the melting range temperature, such as calendering.

The constituents of the recycled, thermally stable polystyrene composition P, in particular components A, B, and C, are further defined in the following.

### Recycled polystyrene composition (component A)

The polystyrene composition P comprises a recycled polystyrene composition as component A, which comprises:
A-1: at least one polystyrene as component A-1,
A-2: optionally at least one impact modifying polymer as component A-2, and
A-3: optionally at least one additive as component A-3.

The at least one polystyrene A-1 comprised in the recycled polystyrene composition A is prepared by a thermally initiated and/or 1,1-bis(tert-butylperoxy)-3,3,5-trimethylcyclohexane initiated radical polymerization.

Preferably, the recycled polystyrene composition A is a recycling material obtained from the recycling of post-consumer goods, preferably selected from food packaging, office supplies, cosmetics packaging, automobile equipment, household appliance and electrical equipment.

In a preferred embodiment, the recycled polystyrene composition A comprises (or consists of):
A-1: at least one recycled polystyrene A-1;
A-2: at least one impact modifying polymer A-2, comprising polymer particles derived from at least one monomer selected from styrene, 1,3-butadiene, isoprene, acrylonitrile, ethylene, C₃ to C₁₂ alpha-olefins, and combinations thereof; and
A-3: optionally at least one additive as component A-3.

In one embodiment of the invention, the recycled polystyrene A-1 is prepared by a thermally initiated radical polymerization process.

In one embodiment of the invention, the recycled polystyrene A-1 is prepared by a radical polymerization process initiated by 1,1-bis(tert-butylperoxy)-3,3,5-trimethylcyclohexane.

In one embodiment of the invention, the polystyrene A-1 is prepared by thermally initiated radical polymerization process and is initiated by 1,1-bis(tert-butylperoxy)-3,3,5-trimethylcyclohexane.

As used herein, the term "polystyrene" refers to a polymer that contains monomer residues from one or more monomers selected from styrene, p-methyl styrene, tertiary butyl styrene, dimethyl styrene, nuclear brominated or chlorinated derivatives thereof and combinations thereof.

According to a preferred embodiment, the polystyrene A-1 comprises at least 30 % by weight, more preferably at least 60 % by weight, in particular preferably at least 85 % by weight, based on the polystyrene A-1, of one or more monomers selected from styrene, p-methyl styrene, tertiary butyl styrene, dimethyl styrene, nuclear brominated or chlorinated derivatives thereof and combinations thereof. Preferably the polystyrene A-1 comprises at least 30 % by weight, more preferably at least 60 % by weight, in particular preferably at least 85 % by weight, based on the polystyrene A-1, of styrene.

According to one embodiment, the recycled polystyrene composition A may be selected from standard polystyrenes (also referred to as general purpose polystyrene GPPS). In this embodiment, the polystyrene A-1 is selected from standard polystyrene and the impact modifying polymer A-2 is absent. Optionally, the recycled polystyrene composition A may comprise at least one additive as component A-3.

Suitable standard polystyrenes or also called general purpose polystyrenes (GPPS) are prepared by the method of radical polymerization of styrene or styrene derivatives mentioned above initiated by thermal initiation and/or 1,1-bis(tert-butylperoxy)-3,3,5-trimethylcyclohexane initiation. Preferably, GPPS is prepared by polymerization of styrene or a mixture of styrene with any other copolymerizable monomer mentioned above. Preferably, GPPS is prepared by polymerization of styrene or a mixture of styrene and one or more monomers selected from p-methyl styrene, tertiary butyl styrene, dimethyl styrene, nuclear brominated or chlorinated derivatives thereof and combinations thereof. Generally, the non-uniformity of the polymer, which may be influenced by the polymerization method, is of minor importance here.

According to an alternative embodiment, the recycled polystyrene composition A may be selected from high impact polystyrenes (also referred to as HIPS). In this embodiment, the polystyrene A-1 may be selected from standard polystyrene and at least one impact modifying polymer A-2 is present. Optionally, the recycled polystyrene composition A may comprise at least one additive as component A-3. In one embodiment, the recycled polystyrene composition A consists of 100 % by weight, based on A, of HIPS.

According to a further embodiment, the recycled polystyrene composition A may comprise mixtures of high-impact polystyrenes (HIPS) and standard polystyrenes (GPPS).

In a preferred embodiment, the recycled polystyrene composition A is selected from high-impact polystyrenes (HIPS). The preparation, structure, and properties of said polystyrenes are generally described in detail in the literature, e.g. Echte, Haaf, Hambrecht in Angew. Chem. (Int. Ed. Engl.) 20, 344-361, (1981); and in Kunststoffhandbuch, edited by Vieweg and Daumiller, Vol. 4 "Polystyrol", Carl-Hanser-Verlag Munich (1996).

As used herein, the term "high impact polystyrene" or "HIPS" refers to rubber modified polystyrene, comprising a polystyrene A-1 as matrix material and at least one impact modifying polymer A-2 described in the following as elastomeric material. For example, HIPS can be prepared by adding a polybutadiene rubber, or other elastomeric materials, into styrene monomer during polymerization, so it can become chemically bonded to the polystyrene, forming a graft copolymer which helps to incorporate impact modifying polymers A-2 into the final resin composition. According to the invention, the polymerization is made by the method of radical polymerization of styrene or styrene derivatives mentioned above in the presence of the at least one impact modifying polymer A-2 initiated by thermal initiation and/or 1,1-bis(tert-butylperoxy)-3,3,5-trimethylcyclohexane initiation.

As used herein, the term "elastomeric materials" refers to a material that deforms when stress is applied and returns to its original configuration when the stress is removed.

Typically, the elastomeric materials that can be used to make high impact polystyrene (HIPS) is one or more impact modifying polymer A-2 comprising monomer residues from styrene, 1,3-butadiene, isoprene, acrylonitrile, ethylene, C₃ to C₁₂ alpha olefins, and combinations thereof.

As used herein, the term "monomer residues" or "polymer made of" or "polymer comprising" specific monomers refers to the monomeric repeat unit in a polymer derived from polymerization of the specific monomers which contain a polymerizable unsaturated group. As used herein, the term "polymer" is meant to encompass homopolymers, copolymers and graft copolymers.

In some embodiments of the invention, the impact modifying polymer A-2 can be a rubbery polymer containing an ethylenic unsaturation. In some cases, the impact modifying polymer A-2 can be a co- or homopolymer of one or more C₄₋₆ conjugated diolefins, such as polybutadiene.

In some particular embodiments, the polystyrene composition A is selected from high-impact polystyrenes comprising a polystyrene A-1 and at least one impact modifying polymer A-2 selected from butadiene rubbers (BR) and styrene-butadiene rubbers (SBR).

The butadiene rubber is in particular a medium or high cis-polybutadiene. Typically, the high cis-polybutadiene contains not less than 90 % by weight, in some cases more than about 93 % by weight, based on the polybutadiene, of monomer units in the cis-configuration. In many instances, medium cis-polybutadiene has a cis content from about 30 to 50 % by weight, in some cases from about 35 to 45 % by weight, based on the polybutadiene.

Suitable butadiene rubbers that can be used in the invention include those commercially available from various sources; for example Buna CB 550 available from Arlanxeo Corporation (Pittsburgh, PA); SE PB 5800-Schkopau available from Trinseo LLC (Berwyn, PA); Diene^{®} 55AC15 available from Lion Elastomers LLC (Orange, Texas) and KBR 710S available from Kumho Petrochemical Co. (Seoul, Republic of Korea).

Furthermore, the impact modifying polymer A-2 may be selected from structurally modified specific butadiene rubbers - for example, with a 1,4-cis and/or 1,4-trans fraction or 1,2- and 1,4 linkage fraction modified relative to conventional rubbers.

Furthermore, instead of butadiene rubber, it is also possible to use other diene rubbers, and also elastomers of the type of ethylene-propylene-diene copolymer (EPDM rubber), and also hydrogenated diene rubbers, as impact modifying polymer A-2.

The recycled polystyrene A can be obtained from recycling a polystyrene, which was previously prepared by polymerizing one or more of the afore-mentioned styrene monomers, selected from styrene, p-methyl styrene, tertiary butyl styrene, dimethyl styrene, nuclear brominated or chlorinated derivatives thereof and combinations thereof, optionally in the presence of the impact modifying polymer A-2, with the provision that:
(i) the polymerization reaction is initiated thermally;
(ii) the polymerization reaction is initiated by radical initiation using 1,1-bis(tert-butylperoxy)-3,3,5-trimethylcyclohexane as initiator; or
(iii) the polymerization reaction is initiated thermally and by radical initiation using 1,1-bis(tert-butylperoxy)-3,3,5-trimethylcyclohexane as initiator.

Thermal initiation may be induced by subjecting the reaction mixture comprising one or more of the afore-mentioned styrene monomers, selected from styrene, p-methyl styrene, tertiary butyl styrene, dimethyl styrene, nuclear brominated or chlorinated derivatives thereof and combinations thereof, optionally in the presence of the impact modifying polymer A-2 to increased temperatures, e.g. to temperature between 100°C and 180°C, preferably 110 to 150°C. At this temperature, the polymerization reaction is initiated without the addition of initiators.

If 1,1-bis(tert-butylperoxy)-3,3,5-trimethylcyclohexane is used as initiator, the initiator is preferably used in an amount of 50 to 500 ppm, based on the total reaction mixture, more preferably 100 to 250 ppm.

For example, methods for preparation are disclosed in US 2011/0054123, US 5,543,461 (see col. 5, I. 3 to 42), US 5,861,455 (see col. 3, I. 42 to col. 4, I. 17) and US 6,613,837 (see col. 3, 1.55 to col. 4, 23).

In one embodiment, the recycled polystyrene compositions A are high-impact polystyrenes which comprise 80 to 99 % by weight, preferably 85 to 98 % by weight of a styrene matrix (polystyrene A-1), preferably polystyrene, and 1 to 20 % by weight, preferably 2 to 15 % by SL22/74571 PCEP weight, of at least one impact modifying polymer A-2, preferably a polybutadiene and/or a styrene-butadiene copolymer.

The impact modifying polymer A-2 - if present - is typically present in the form of particles, often having an average particle size (measured by common methods) of at least about 0.25 µm, in some cases at least about 0.5 µm and in other cases at least about 1 µm. Preferably, the average particle size (volume based) of the particles of the impact modifying polymer A-2 can be up to about 12 µm, in some cases up to about 11 µm and in other cases up to about 10 µm. Often, the average particle size of the particles of the impact modifying polymer A-2 can be in the range of from 1 µm to 10 µm, e.g. 2, 4 or 7 µm. The average particle size of the particles of the impact modifying polymer A-2 can be any value or range between any of the values recited above.

The particle size of the impact modifying polymer A-2 is typically measured by analyzing the spectra obtained from light scattering through a solution of the particles in a polystyrene solvent, such as methyl ethyl ketone or ethyl acetate. Instruments suitable for this measurement include Horiba's Model LA-960V2 or Beckman Coulter's LS 13 320.

Typically, the weight average molecular weight (M_{w}) of the polystyrene A-1 ranges from 50,000 to 500,000 g/mol, preferably from 120,000 to 250,000 g/mol, more preferably from 130,000 to 240,000 g/mol. In particular the weight average molecular weight (M_{w}) of the polystyrene A-1 ranges from 170 000 to 250 000 g/mol, preferably from 180,000 to 207,000 g/mol, more preferably about 190,000 g/mol. In particular the weight average molecular weight (M_{w}) of the polystyrene A-1 ranges from 120 000 to 240 000 g/mol, preferably from 132,000 to 207,000 g/mol, more preferably about 165,000 g/mol. Typically molecular weight values are determined using gel permeation chromatography (GPC) using appropriate polystyrene standards. Unless otherwise indicated, the molecular weight values indicated herein are weight average molecular weights (Mw).

Typically, the recycled polystyrene composition A may comprise (or consist of) GPPS or HIPS having a viscosity number VN (measured according to DIN 53726) in the range of 50 to 100 ml/g, preferably 60 to 80 ml/g.

In particular, GPPS and/or HIPS, which have been equipped with one or more (typically unknown due to the often unknown origin of the recycled goods) additives A-3, such as, for example, mineral oil (e.g. medical white oil), lubricants (e.g. metal stearates) stabilizer, antistatic agents, flame retardants or waxes, can be used as recycled polystyrene composition A.

### Phenolic Antioxidant (Component B)

According the invention, the polystyrene composition P comprises at least one sterically hindered phenolic antioxidant B. The phenolic antioxidant component B is preferably selected from sterically hindered phenolic antioxidants of the general formula (I) and mixtures thereof: 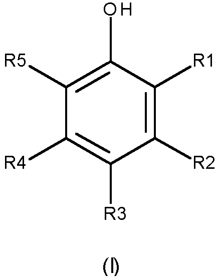 wherein R1 to R5 independently represent hydrogen atoms or alkyl groups having 1 to 70 carbon atoms, wherein the hydrocarbon group optionally comprises at least one hetero atom selected from O and S, and wherein at least one of the substituents R1 and R5 represents a hydrocarbon group having at least 3 carbon atoms.

In a further preferred embodiment, at least one of the substituents R1 and R5 represents a hydrocarbon group having 3 to 6 carbon atoms, preferably an iso-propyl group, a sec-butyl group, a tert-butyl group, a neo-pentyl group and /or a cyclohexyl group
In one embodiment, at least one of the substituents R2, R3 and R4 represent a hydrogen atom. In one embodiment, at least one of the substituents R2, R3 and R4 represent a hydrocarbon group having at least 1 carbon atom.

In one embodiment, at least one of the substituents R1 and R5 represents a tert-butyl group; at least two of the substituents R2, R3 and R4 represent a hydrogen atom; and one of the substituents R2, R3 and R4 represent a hydrocarbon group having at least 1 carbon atom.

In one embodiment, the at least one sterically hindered phenolic antioxidant B is selected from compounds of the general formula (I-a): 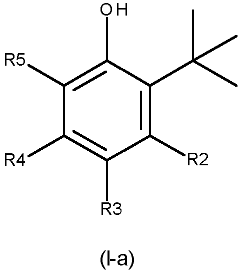 wherein R3 represents a hydrocarbon group having 1 to 70 carbon atoms, wherein the hydrocarbon group optionally, comprises at least one hetero atom, selected from O and S; and R2, R4, and R5 independently represent hydrogen atoms or alkyl groups having 1 to 4 carbon atoms and wherein at least one of the substituents R2, R3, and R4 is not hydrogen.

In one embodiment of the invention, the at least one sterically hindered phenolic antioxidant B is selected from octadecyl 3-(3,5-di-tert-butyl-4-hydroxyphenyl)propionate (CAS-No.: 2082-79-3, Irganox^{®} 1076), 2,6-di-tert-butyl-p-cresol (CAS-No. 87-97-8, Kerobit^{®} TBK), 2-(1,1-dimethylethyl)-6-[(3-(1,1-dimethylethyl)-2-hydroxy-5-methylphenyl]methyl-4-methylphenyl acrylate (CAS-No. 61167-58-6, Irganox^{®} 3052), and mixtures thereof.

Further examples of compounds that may be used as component B include oxygen radical scavengers such as pentaerythritol tetrakis(3-(3,5-di-tert-butyl-4-hydroxyphenyl)propionate) (CAS-No. 6683-19-8, Irganox^{®} 1010, BASF SE), tetrakis[methylene-3-(3,5-di-tert-butyl-4-hydroxyphenyl)-propionate]methane (CAS-No. 6683-19-8, Songnox^{®} 1010, Songwon), 2,6-di-tert-butyl-4-(4,6-bis(octylthio)-1,3,5-triazin-2-ylamino)phe (CAS-No. 991-84-4, Irganox^{®} 565, BASF SE) and blends thereof, carbon radical scavengers such as 2-[1-(2-hydroxy-3,5-di-tert-pentylphenyl)ethyl]-4,6-di-tert-pentylphenyl acrylate (CAS-No. 123968-25-2, Sumilizer^{®} GS, Sumitomo), 2-(1,1-dimethylethyl)-6-[[3-(1,1-dimethylethyl)-2-hydroxy-5-methylphenyl]-methyl]-4-methylphenylacrylat (CAS-No. 61167-58-6, Sumilizer^{®} GM, Sumitomo) and blends thereof.

In one embodiment of the invention, the component B comprises or consists of a 2,6-di-tert-butyl-p-cresol (CAS-No. 87-97-8), a hindered phenolic antioxidant of following formula (I-b):

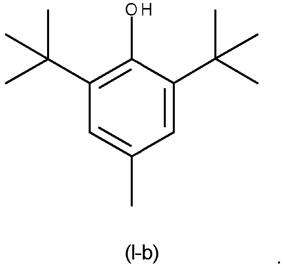

In one embodiment of the invention, the component B comprises or consist of 2-(1,1-dimethylethyl)-6-[(3-(1,1-dimethylethyl)-2-hydroxy-5-methylphenyl]methyl-4-methylphenyl acrylate (CAS-No. 61167-58-6), a hindered phenolic antioxidant of following formula (I-c):

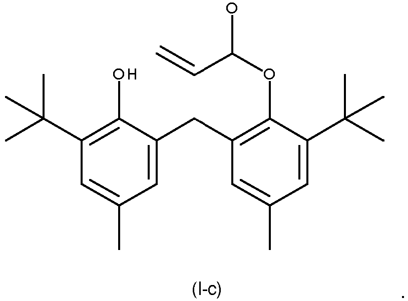

In one embodiment of the invention, the component B comprises or consists of octadecyl 3-(3,5-di-tert-butyl-4-hydroxyphenyl)propionate (CAS-No.: 2082-79-3), a hindered phenolic antioxidant of following formula (I-d):

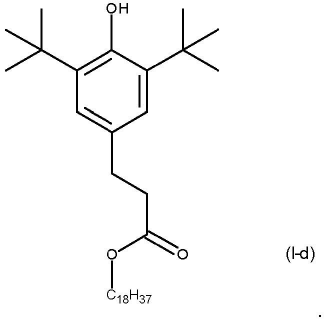

In one embodiment of the invention, the component B comprises mixtures of hindered phenolic antioxidant of formulas (I-b), (I-c) and/or (I-d).

Preferably, the thermal stability of the polystyrene composition is improved by admixing the recycled polystyrene composition A with 0.01 to 5 % by weight, based on the total recycled, thermally stable polystyrene composition P, more preferably 0.1 to 2 % by weight, often 0.1 to 1 % by weight of the at least one sterically hindered phenolic antioxidant B.

### Additives (Component C)

The recycled, thermally stable polystyrene composition P may comprise up to 10 % by weight, preferably up to 5 % by weight, based on the total recycled, thermally stable polystyrene composition P, of one or more additional additive C, which is different from component B.

Preferably, the recycled, thermally stable polystyrene composition P may comprise from 0.01 to 10 % by weight, preferably 0.1 to 5, more preferably 0.1 to 2.5 % by weight, based on the total recycled, thermally stable polystyrene composition P, of one or more additives C. The additives C may be admixed with the polystyrene composition A and the sterically hindered phenolic antioxidant B during the preparation of the recycled, thermally stable polystyrene composition P.

However, often the recycled polystyrene composition A comprises significant amounts of additives A-3, which may be identical to additives C. In this case, the addition of further additives C is not necessary, or only respectively reduces amounts of additives C are required. Thus, the recycled, thermally stable polystyrene composition P may comprise commonly known additives A-3 which originate from the recycled polystyrene composition A, but which are not included in the amount described for additive C.

The additional additive C is typically selected from commonly known additives for polystyrenes and copolymers and compositions thereof. Substances that can be used as additives or auxiliaries are the polymer additives known to the person skilled in the art and described in the prior art (e.g. Plastics Additives Handbook, ed. Schiller et al., 6th Ed, 2009, Hanser). The additive and/or auxiliary can be added either before or during the compounding procedure (mixing of the polymeric components A and B in the melt).

The recycled, thermally stable polystyrene composition P may comprise, as component C, from 0.01 to 5% by weight of usual additives, such as processing aids, stabilizers, oxidation inhibitors, ultra-violet light absorbers, lubricants, flame retardants, colorants, pigments, and plasticizers.

Examples of oxidation inhibitors and heat stabilizers are sterically hindered phenols, various substituted representatives of these groups and mixtures thereof in concentrations of up to 1% by weight, based on the total recycled, thermally stable polystyrene composition P.

UV stabilizers which may be mentioned, and are generally used in amounts of up to 2% by weight, based on the total recycled, thermally stable polystyrene composition P, are various substituted resorcinols, salicylates, benzotriazoles and benzophenones different from component B. Furthermore, secondary stabilizers such as tris(2,4-di-tert-butylphenol) phosphite (CAS-No. 31570-04-4, Irgafos^{®} 168 from BASF SE, Germany) may be used. Said secondary stabilizers are commercially available. The afore-mentioned stabilizers are preferably used in amounts of 0.01 to 0.5 wt.-%, more preferably 0.1 to 0.3 wt.-%, based on the total recycled, thermally stable polystyrene composition P.

An example of a processing aid, which can be used in amounts from 0.1 to 5% by weight, preferably from 0.5 to 4% by weight, based on the total recycled, thermally stable polystyrene composition P, is a homogeneously miscible oil or oil mixture, in particular selected from mineral oils (medical grade mineral oil), vegetable oils (also referred to as plant oils) and silicon oils. In particular, medical grade mineral oil (e.bg. DAB 70) may be used as additive C in amounts of 1 to 4 % by weight, based on the recycled, thermally stable polystyrene composition P.

Preferred lubricants may be selected from long-chain fatty acids, such as stearic acid or behenic acid, salts of fatty acids (e.g. calcium stearate or zinc stearate), esters of fatty acids (e.g. stearyl stearate or pentaerythrityl tetrastearate), amide derivatives of fatty acids (e.g. ethylenebisstearylamide, erucamide, Acrawax^{®}), phosphates (such as tricalcium phosphate), hydrocarbon waxes, such as microcrystalline waxes and paraffin waxes (e.g. Besquare^{®}), and fumed silica (e.g. Aerosil^{®}). Typically fatty acids are carboxylic acids having a linear or branched, saturated or unsaturated C₅-C₂₅ alkyl chain.

In one embodiment of the invention, the recycled, thermally stable polystyrene composition P may comprise as additive C 4,4'-(1,6-hexamethylenebis(formylimino))bis(2, 2,6,6-tetramethyl-1-oxylpiperidine), an polymerization inhibitor of the general formula (II-a) (commercially available as Uvinul^{®} 4040P from BASF):

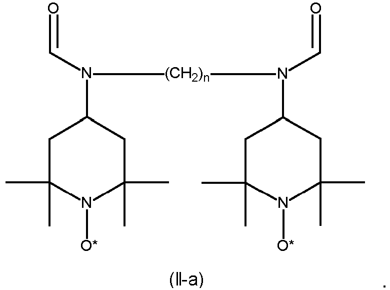

In one embodiment of the invention, the recycled, thermally stable polystyrene composition P may comprise as additive C 5,7-bis(1,1-dimethylethyl)-3-[2,3-dimethylphenyl]-2(3H)-benzofuranone (CAS-No. 201815-03-4), an antioxidant of the general formula (II-b) (commercially available as Irganox^{®} HP-136 from BASF):

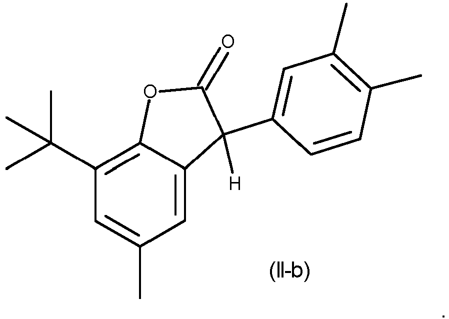

In one embodiment of the invention, the recycled, thermally stable polystyrene composition P may comprise as additive C 2,3-dimethyl-2,3-diphenylbutane (CAS-No. 1889-67-4), a flame-retardant synergist of the general formula (II-c) (commercially available as Perkadox^{®} 30 from Akzo Nobel):

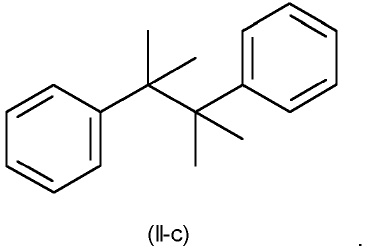

In one embodiment of the invention, the recycled, thermally stable polystyrene composition P may comprise as additive C N-butyl-5,15-bis(2,4,4-trimethylpentan-2-yl)-9,11-dioxa-2-thia-10-nickelatricyclo[10.4.0.0^{3,8}]hexadeca-1(16),3,5,7,12,14-hexaen-10-aminium (CAS-No. 14516-71-3), a light stabilizer of the general formula (II-d) (commercially available as Chimassorb^{®} N-705 from BASF):

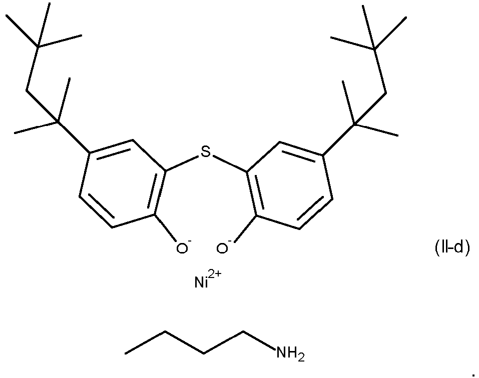

In one embodiment of the invention, the recycled, thermally stable polystyrene composition P may comprise as additive C mixtures of the components of the general formulas (II-a), (II-b), (II-c) and/or (II-d).

Preferably, the components of the general formulas (II-a), (II-b), (II-c) and/or (II-d) are each present in amounts of 0 to 2 % by weight, based on the total recycled, thermally stable polystyrene composition P, more preferably 0 to 1 % by weight.

Process for providing superior thermal stability in the mechanical recycling of polystyrene compositions.

The invention also relates to a process for providing superior thermal stability in the mechanical recycling of polystyrene, wherein the process comprises the following process steps:
(i) recycling of a polystyrene composition A obtained from waste plastic material, comprising at least one recycled polystyrene as component A-1 and optionally at least one impact modifying polymer A-2 as component A-2, wherein the at least one polystyrene A-1 is obtained from a thermally initiated and/or 1,1-bis(tert-butylperoxy)-3,3,5-trimethylcyclohexane initiated radical polymerization;
(ii) admixing the recycled polystyrene composition A with at least one sterically hindered phenolic antioxidant as component B and optionally at least one further additive as component C; and
(iii) extruding the obtained blend of the recycled polystyrene composition A, the at least one sterically hindered phenolic antioxidant B and optionally the at least one further additive C.

The recycling of the polystyrene composition A in process step (i) is preferably achieved by recycling of polymer waste material obtained from the recycling of post-consumer goods, for example selected from food packaging, office supplies, cosmetics packaging, automobile equipment, household appliance and electrical equipment.

The waste material is preferably separated into polymer classes to reduce the amount of polymer classes different from component A, and optionally washed. Preferably, the obtained separated polymer waste is pretreated, e.g. via homogenization, grinding, crushing, and/or micronization, before being introduces to process step (ii) or (iii). The polystyrene composition A has often been subjected to one or more thermal compounding steps, such as extrusion processes or injection molding processes, before being used in process according to the invention.

Often, the recycled polystyrene A has undergone at least one thermal compounding step at a temperature above the melting temperature of the recycled polystyrene A before being used in process according to the invention, for example at a temperature in a range from 180°C to 320°C, often in a range from 200°C to 300°C, for example in a range from 220°C to 280°C, determined according to ISO 294. Optionally, the recycled polystyrene A has been mechanically stressed by mixing, in particular by shear forces, for example in an extruder, e.g. single-screw or twin-screw extruder, or in other conventional plasticizing devices, such as Brabender mixers or Banbury mixers, before being used in process according to the invention.

Process steps (ii) and (iii) may be performed separately or in combination with each other. Typically, the components A and B and optionally C, are melt compounded at a temperature in the range of 180 to 300 °C, preferably 200 to 280 °C. Processes suitable for process steps (ii) and (iii) are known per se. For example extruders, such a co-rotating or counter rotating single- or twin screw extruders, or other conventional kneading apparatuses, such as continuous or batch kneaders, Brabender mixers or Banbury mixers, may be used for preparing the recycled, thermally stable polystyrene composition P. Said kneading elements should ensure sufficient homogenization of the components guaranteeing micro mixing. The inventive recycled, thermally stable polystyrene composition P may be obtained by mixing and homogenization the components by the usual methods of plastic technology, wherein the sequence of adding the components may be varied.

The feature of providing superior thermal stability in the mechanical recycling of polystyrene can be found by measuring and comparing thermal stability of the polystyrene product when prepared by a process as described by the invention with a classical polystyrene recycling method. As an example, the re-monomerization due to the degradation of the polymeric structure during extrusion runs (at elevated temperatures) can be measured by determining the styrene levels in the extruded product.

The invention also relates to a process for providing a recycled thermally stable polystyrene composition P, comprising the process steps (i) to (iii).

The constituents used in the process according to the invention, in particular components A, B, and C and their preferred embodiments, are as defined herein above.

### Process for preparing the recycled, thermally stable polystyrene composition P

Furthermore, the present invention is directed to a process for preparing the inventive recycled, thermally stable polystyrene composition P. In particular the invention is directed to a process for preparing the inventive recycled, thermally stable polystyrene composition P as described herein, wherein the components A and B and optionally C, are melt compounded at a temperature in the range of 180 to 300 °C, preferably 200 to 280 °C.

The recycled, thermally stable polystyrene composition P may be prepared by processes known per se. For example extruders, such a co-rotating or counter rotating single- or twin screw extruders, or other conventional kneading apparatuses, such as continuous or batch kneaders, Brabender mixers or Banbury mixers, may be used for preparing the recycled, thermally stable polystyrene composition P. Said kneading elements should ensure sufficient homogenization of the components guaranteeing micro mixing. The inventive recycled, thermally stable polystyrene composition P may be obtained by mixing and homogenization the components by the usual methods of plastic technology, wherein the sequence of adding the components may be varied.

Preferably, the polystyrene composition A, may be pre-treated before the melt compounding with component B, e.g. via homogenization, grinding, crushing, and/or micronization.

### Use of the recycled, thermally stable polystyrene compositions P

Further, the present invention is directed to the use of the inventive recycled, thermally stable polystyrene composition P described herein for the preparation of molded articles (shaped articles) for various applications, e.g. applications in automotive sector, electronics, household articles, constructions, healthcare articles, packaging, sports and leisure articles. The recycled, thermally stable polystyrene composition P of the invention can be used for the production of molded articles of any type. These can be produced via injection molded article, extrusion and blow molded article processes. Another type of processing is the production of molded articles via thermoforming from sheets or films previously produced, and the process of film-overmolded article. In particular, the inventive recycled, thermally stable polystyrene composition P is used in an extrusion process to form molded articles. Examples of these molded articles are films, profiles, housing parts of any type. In particular, the recycled, thermally stable polystyrene compositions P are used in extrusion processes for the manufacturing of extruded sheets.

The recycled, thermally stable polystyrene compositions P may be used as such or in combination with virgin materials, e.g. virgin polystyrene compositions.

For example, in one embodiment of the invention, the recycled, thermally stable polystyrene compositions P may be used in a polymer blend P* comprising 1 to 99 % by weight, preferably 2 to 70 % by weight, often 5 to 50 % by weight, based on the total weight of the polymer blend P*, of the recycled, thermally stable polystyrene composition P according to the invention and 1 to 99 % by weight, preferably 30 to 98 % by weight, often 50 to 95 % by weight, based on the total weight of the polymer blend P*, of virgin polymer compositions comprising polystyrene, high impact polystyrene and mixtures thereof.

Moreover, in an alternative embodiment, the recycled, thermally stable polystyrene compositions P may be used for constructing a layered structure S comprising at least two layers, preferably at least three layers, wherein at least one layer is conformed of the recycled, thermally stable polystyrene composition P according to the invention and at least one of the layers is conformed of a polymer composition P' different from the recycled, thermally stable polystyrene composition P. In one preferred embodiment of this object, the layered structure is a three layered extrusion structure S having a P'-P-P' layer sequence, i.e. a three-layered structure S, wherein the recycled, thermally stable polystyrene compositions P conforms the central layer which is covered on both expansion surfaces with at least one layer made of an polymer composition P' different from the recycled, thermally stable polystyrene composition P according to the invention. Often the polymer composition P' is a virgin polymer composition P' comprising polystyrene, high impact polystyrene or mixtures thereof.

### Molded articles made of the recycled, thermally stable polystyrene compositions P

Further, the present invention is directed to molded articles made of the inventive recycled, thermally stable polystyrene composition P described herein. The molded articles can be selected from molded articles of any type, for example as described herein. In particular, the molded articles can be for example packaging materials, in particular packaging materials for food packaging, packaging materials for cosmetics, packaging materials for pharmaceutical products, housings of electrical equipment, housings and cladding for medical equipment, toys for children, sheet-like wall elements, thermally insulated transport containers, molded articles for sanitary and bath equipment.

According to the invention, beside the recycled, thermally stable polystyrene compositions P as such, the molded articles may include polymer blends P* comprising 1 to 99 % by weight, preferably 2 to 70 % by weight, often 5 to 50 % by weight, based on the total weight of the polymer blend P*, of the recycled, thermally stable polystyrene compositions P according to the invention and 1 to 99 % by weight, preferably 30 to 98 % by weight, often 50 to 95 % by weight, based on the total weight of the polymer blend P*, of virgin polymer compositions comprising polystyrene, high impact polystyrene and mixtures thereof.

Moreover, in an alternative embodiment, the molded articles may be layered structures S comprising at least two layers, preferably at least three layers, wherein at least one layer is conformed of the recycled, thermally stable polystyrene composition P according to the invention and at least one of the layers is conformed of a polymer composition P' different from the recycled, thermally stable polystyrene composition P. In one preferred embodiment of this object, the layered structure is a three layered extrusion structure S having a P'-P-P' layer sequence, i.e. a three-layered structure S, wherein the recycled, thermally stable polystyrene compositions P conforms the central layer which is covered on both expansion surfaces with at least one layer made of an polymer composition P' different from the recycled, thermally stable polystyrene compositions P according to the invention.

Often the polymer composition P' is a virgin polymer composition P' comprising polystyrene, high impact polystyrene or mixtures thereof.

The invention is further illustrated by the following examples and claims.

### Examples

### 1. Effect of the initiation process on the thermal stability of the polystyrene composition

High-impact modified polystyrene (HIPS) was produced in a standard 2-vessel-2-tower polymerization cascade, wherein the first vessel is the pre-polymerization vessel, which is fed with polybutadiene rubber solution and styrene. The second vessel is the vessel in which phase inversion to the final HIPS morphology occurs. The obtained HIPS comprises polybutadiene rubber particles of 2 µm average diameter in a polystyrene matrix with a total polybutadiene content of 8 wt.-%.

Polymerization was initiated by different mechanisms:
Ex. 1: thermal initiation at temperatures between approx. 110 and 140 °C.
Ex. 2: radical initiation using 180 ppm of 1,1-bis(tert-butylperoxy)-3,3,5-trimethylcyclohexane (CAS-No. 6731-36-8) as initiator.
Ex. 3 (comparative): radical initiation using 180 ppm benzoyl peroxide (benzoic peroxyanhydride, CAS-No. 94-36-0) as initiator.

The HIPS obtained according to examples 1 to 3 are further admixed with 600 ppm zinc stearate and 400 ppm octadecyl 3-(3,5-di-tert-butyl-4-hydroxyphenyl)propionate (CAS-No.: 2082-79-3, Irganox^{®} 1076, BASF).

Regeneration of styrene monomer was then investigated by multiple extrusion runs at elevated temperatures with a high shearing screw. The harsh conditions permit a good differentiation among the samples. Extrusion trials were run at increased temperature and shearing to enforce re-monomerization. This treatment simulates conditions during the (repeated) recycling of a polymer waste material. Following conditions were applied:

| | |
|---|---|
| extruder: | Coperion ZSK 30 |
| temperature: | 260°C |
| number of revolutions: | 200 1/min |
| throughput | 10 kg/h |
| no degassing | |

In order to determine the degradation of the polymeric structure during the extrusion runs, the viscosity number VN of each composition was determined before the first extrusion run and after each extrusion run. Viscosity number VN was determined according to DIN 53726.

**Table 1.**

| Extrusion run no. | Viscosity number VN [ml/g] | | |
|---|---|---|---|
| | Ex. 1 | Ex. 2 | Ex. 3 (comparative) |
| 0 | 71 | 72 | 72 |
| 1 | 70.5 | 70 | 67.5 |
| 2 | 70 | 68.5 | 67 |
| 3 | 69.5 | 69 | 65.5 |
| 4 | 68.5 | 67 | 66 |
| 5 | 68.5 | 67 | 64.5 |
| 6 | 68 | 65.5 | 64 |

The experimental data of Table 1 demonstrate that the viscosity number VN of a 0.5 wt.-% solution of the respective polymer composition after several extrusion runs is reduced in all HIPS polymer compositions. However, the thermally initiated HIPS of Example 1 is more stable compared to the radically initiated HIPS products. Among the radically initiated HIPS products, the HIPS product of Example 2, initiated by 1,1-bis(tert-butylperoxy)-3,3,5-trimethylcyclohexane, is favorable from the view point of thermal stability.

### 2. Effect of the phenolic antioxidant B on thermal stability of polystyrene composition

Polystyrene compositions according to Table 2 were prepared using the following components:
- A:: high impact polystyrene (HIPS) having a polybutadiene content of 8 wt.-%, a styrene content of 89 wt.-% and content of medical white oil (DAB 70) of 3 wt.-%. Polymerization was initiated using 180 ppm (based on the total weight of the reaction mixture) 1,1-bis(tert-butylperoxy)-3,3,5-trimethylcyclohexane (CAS-No. 6731-36-8) as initiator. Component A further comprises 600 ppm (i.e. 0.06 wt.-% based on the total weight of HIPS and medical white oil) of zinc stearate.
- B-1:: octadecyl 3-(3,5-di-tert-butyl-4-hydroxyphenyl)propionate (CAS-No.: 2082-79-3, Irganox^{®} 1076, BASF)
- B-2:: 2,6-di-tert-butyl-p-cresol (CAS-No. 87-97-8, Kerobit^{®} TBK)

Compositions according to Table 2 were produced using an extruder at an extrusion temperature of 260°C.

**Table 2. Composition of Examples 4 to 6**

| Component | Ex. 4 (Comparative) | Ex. 5 | Ex. 6 |
|---|---|---|---|
| A | 100 | 99.7 | 99.7 |
| B-1 | - | 0.3 | - |
| B-2 | - | - | 0.3 |

The compositions according to Examples 4, 5 and 6 were repeatedly extruded. This treatment simulates conditions during the (repeated) recycling of a polymer waste material. Following conditions were applied:

| | |
|---|---|
| extruder: | Coperion ZSK 30 |
| temperature: | 260°C |
| number of revolutions: | 200 1/min |
| throughput | 10 kg/h |
| no degassing | |

In order to determine re-monomerization due to the degradation of the polymeric structure during the extrusion runs, the styrene levels were determined for each composition before the first extrusion run and after the first, third and fifth extrusion run. Styrene levels were determined by capillary gas chromatography, using head space technique, and with a styrene based calibration curve.

**Table 3. Multiple extrusion of recycled HIPS; styrene levels in ppm.**

| Extrusion trial no. | Ex. 4 (Comparative) | Ex. 5 | Ex. 6 |
|---|---|---|---|
| 0 | 170 | 160 | 150 |
| 1 | 230 | 230 | 230 |
| 3 | 280 | 270 | 280 |
| 5 | 300 | 290 | 290 |

The data of Table 3 show that the addition of hindered phenolic antioxidants B according to the present invention reduce the formation and of emission monomeric styrene during repeated extrusion runs.

Therefore, the recycled, thermally stable polystyrene compositions and the processes described herein allow to prepare polystyrene compositions and products with better quality, which can be used e.g. used for food-packaging. The process is also ecologically of advantage.

## Claims

1. Recycled, thermally stable polystyrene composition P, comprising:
A: at least one recycled polystyrene composition as component A, comprising
A-1: at least one recycled polystyrene as component A-1, wherein the polystyrene is obtained by a thermally initiated and/or 1,1-bis(tert-butylperoxy)-3,3,5-trimethylcyclohexane initiated radical polymerization;
A-2: optionally at least one impact modifying polymer as component A-2, comprising polymer particles derived from at least one monomer selected from styrene, 1,3-butadiene, isoprene, acrylonitrile, ethylene, C₃ to C₁₂ alpha-olefins, and combinations thereof; and
A-3: optionally at least one additive as component A-3;
B: at least one sterically hindered phenolic antioxidant as component B; and
C: optionally at least one additive as component C;
wherein the recycled polystyrene is obtained from waste plastic material.

2. Recycled, thermally stable polystyrene composition P according to claim 1, comprising:
A: 95 to 99.9 % by weight, based on the recycled, thermally stable polystyrene composition P, of at least one recycled polystyrene as component A;
B: 0.1 to 1 % by weight, based on the recycled, thermally stable polystyrene composition P, of at least one sterically hindered phenolic antioxidant as component B; and
C: 0 to 4 % by weight, based on the recycled, thermally stable polystyrene composition P, of at least one additive as component C.

3. Recycled, thermally stable polystyrene composition P according to claim 1 or 2, comprising as component B:
0.1 to 0.5 % by weight, based on the recycled, thermally stable polystyrene composition P, of at least one sterically hindered phenolic antioxidant is selected from compounds of the general formula (I): 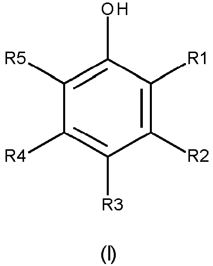 wherein R1 to R5 independently represent hydrogen atoms or alkyl groups having 1 to 70 carbon atoms, wherein the hydrocarbon group optionally comprises at least one hetero atom selected from O and S, and wherein at least one of the substituents R1 and R5 represents a hydrocarbon group having at least 3 carbon atoms.

4. Recycled, thermally stable polystyrene composition P according to any of claims 1 to 3, comprising:
A: 97.5 to 99.9 % by weight, based on the recycled, thermally stable polystyrene composition P, of at least one recycled polystyrene as component A, comprising:
A-1: at least one recycled polystyrene as component A-1, wherein the recycled polystyrene A-1 is prepared by a thermally initiated radical polymerization;
A-2: at least one impact modifying polymer A-2 as component A-2, comprising polymer particles derived from at least one monomer selected from styrene, 1,3-butadiene, isoprene, acrylonitrile, ethylene, C₃ to C₁₂ alpha-olefins, and combinations thereof; and
A-3: optionally at least one additive as component A-3;
B: 0.1 to 0.5 % by weight, based on the recycled, thermally stable polystyrene composition P, of at least one sterically hindered phenolic antioxidant as component B, selected from octadecyl 3-(3,5-di-tert-butyl-4-hydroxyphenyl)propionate (CAS-No.: 2082-79-3), 2,6-di-tert-butyl-p-cresol (CAS-No. 87-97-8), and mixtures thereof; and
C: 0 to 2 % by weight, based on the recycled, thermally stable polystyrene composition P, of at least one additive as component C.

5. Process for providing superior thermal stability in the mechanical recycling of polystyrene, and method for providing a recycled, thermally stable polystyrene composition P, wherein the process comprises the following process steps:
(i) recycling of a polystyrene composition A obtained from waste plastic material, comprising at least one recycled polystyrene as component A-1, which is obtained by a thermally initiated and/or 1,1-bis(tert-butylperoxy)-3,3,5-trimethylcyclohexane initiated radical polymerization;
(ii) admixing the recycled polystyrene composition A with at least one sterically hindered phenolic antioxidant as component B and optionally at least one further additive as component C; and
(iii) extruding the obtained mixture of the recycled polystyrene composition A, the at least one sterically hindered phenolic antioxidant B and optionally the at least one further additive C.

6. Process according to claim 5, wherein the polystyrene composition A comprises:
A-1: at least one recycled polystyrene as component A-1;
A-2: optionally at least one impact modifying polymer as component A-2, comprising polymer particles derived from at least one monomer selected from styrene, 1,3-butadiene, isoprene, acrylonitrile, ethylene, C₃ to C₁₂ alpha-olefins, and combinations thereof; and
A-3: optionally at least one additive as component A-3.

7. Process according to claim 5 or 6, wherein the polystyrene of the recycled polystyrene A-1 is obtained by a thermally initiated radical polymerization process.

8. Process according to claim 5 or 6, wherein the polystyrene of the recycled polystyrene A-1 is obtained by a radical polymerization process initiated by 1,1-bis(tert-butylperoxy)-3,3,5-trimethylcyclohexane.

9. Process according to any of claims 5 to 8, wherein the at least one sterically hindered phenolic antioxidant B is selected from compounds of the general formula (I): 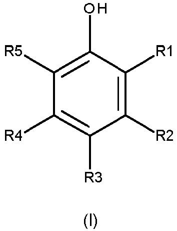 wherein
R1 to R5 independently represent hydrogen atoms or alkyl groups having 1 to 70 carbon atoms, wherein the hydrocarbon group optionally comprises at least one hetero atom selected from O and S, and wherein at least one of the substituents R1 and R5 represents a hydrocarbon group having at least 3 carbon atoms.

10. Process according to any of claims 5 to 9, wherein the at least one sterically hindered phenolic antioxidant B is selected from octadecyl 3-(3,5-di-tert-butyl-4-hydroxyphenyl)propionate (CAS-No.: 2082-79-3), 2,6-di-tert-butyl-p-cresol (CAS-No. 87-97-8), 2-(1,1-dimethylethyl)-6-[(3-(1,1-dimethylethyl)-2-hydroxy-5-methylphenyl]-methyl-4-methylphenyl acrylate (CAS-No. 61167-58-6), and mixtures thereof.

11. Use of a recycled, thermally stable polystyrene composition P according to any of claims 1 to 4 as molded article material in extrusion processes.

12. Use of a recycled, thermally stable polystyrene composition P obtained according to a process of claims 5 to 10 as molded article material in extrusion processes.

13. Use according to claim 11 or 12 as molded article material in extrusion processes for the manufacturing of extruded sheets.

14. Process for preparing a recycled, thermally stable polystyrene composition P according to any of claims 1 to 4, wherein the components A and B, and optionally C, are melt compounded at a temperature in the range of 180 to 280 °C.

15. Molded article made of the recycled, thermally stable polystyrene composition P according to any of claims 1 to 4.

## Patentansprüche

1. Rezyklierte, thermisch stabile Polystyrolzusammensetzung P, umfassend:
A: mindestens eine rezyklierte Polystyrolzusammensetzung als Komponente A, umfassend
A-1: mindestens ein rezykliertes Polystyrol als Komponente A-1, wobei das Polystyrol durch eine thermisch initiierte und/oder durch 1,1-Bis(tert-butylperoxy)-3,3,5-trimethylcyclohexan initiierte radikalische Polymerisation erhalten wird;
A-2: gegebenenfalls mindestens ein schlagzäh-modifizierendes Polymer als Komponente A-2, das Polymerteilchen umfasst, die von mindestens einem Monomer abgeleitet sind, das aus Styrol, 1,3-Butadien, Isopren, Acrylnitril, Ethylen, C₃- bis C₁₂-alpha-Olefinen und Kombinationen davon ausgewählt ist; und
A-3: gegebenenfalls mindestens ein Additiv als Komponente A-3;
B: mindestens ein sterisch gehindertes phenolisches Antioxidans als Komponente B; und
C: gegebenenfalls mindestens ein Additiv als Komponente C;
wobei das rezyklierte Polystyrol aus Kunststoffabfällen gewonnen wird.

2. Rezyklierte, thermisch stabile Polystyrolzusammensetzung P nach Anspruch 1, umfassend:
A: 95 bis 99,9 Gew.-%, bezogen auf die rezyklierte, thermisch stabile Polystyrolzusammensetzung P, mindestens eines rezyklierten Polystyrols als Komponente A;
B: 0,1 bis 1 Gew.-%, bezogen auf die rezyklierte, thermisch stabile Polystyrolzusammensetzung P, mindestens eines sterisch gehinderten phenolischen Antioxidans als Komponente B; und
C: 0 bis 4 Gew.-%, bezogen auf die rezyklierte, thermisch stabile Polystyrolzusammensetzung P, mindestens eines Additivs als Komponente C.

3. Rezyklierte, thermisch stabile Polystyrolzusammensetzung P nach Anspruch 1 oder 2, die als Komponente B umfasst:
0,1 bis 0,5 Gew.-%, bezogen auf die rezyklierte, thermisch stabile Polystyrolzusammensetzung P, mindestens eines sterisch gehinderten phenolischen Antioxidans, das aus Verbindungen der allgemeinen Formel (I) ausgewählt ist: 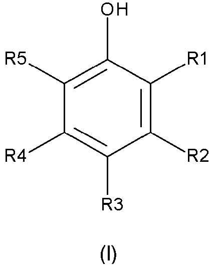 wobei R1 bis R5 unabhängig voneinander Wasserstoffatome oder Alkylgruppen mit 1 bis 70 Kohlenstoffatomen darstellen, wobei die Kohlenwasserstoffgruppe gegebenenfalls mindestens ein Heteroatom, ausgewählt aus O und S, umfasst, und wobei mindestens einer der Substituenten R1 und R5 eine Kohlenwasserstoffgruppe mit mindestens 3 Kohlenstoffatomen darstellt.

4. Rezyklierte, thermisch stabile Polystyrolzusammensetzung P nach einem der Ansprüche 1 bis 3, umfassend:
A: 97,5 bis 99,9 Gew.-%, bezogen auf die rezyklierte, thermisch stabile Polystyrolzusammensetzung P, mindestens eines rezyklierten Polystyrols als Komponente A, umfassend:
A-1: mindestens ein rezykliertes Polystyrol als Komponente A-1, wobei das rezyklierte Polystyrol A-1 durch eine thermisch initiierte radikalische Polymerisation hergestellt wird;
A-2: mindestens ein schlagzäh-modifizierendes Polymer A-2 als Komponente A-2, das Polymerteilchen umfasst, die von mindestens einem Monomer abgeleitet sind, das aus Styrol, 1,3-Butadien, Isopren, Acrylnitril, Ethylen, C₃- bis C₁₂-alpha-Olefinen und Kombinationen davon ausgewählt ist; und
A-3: gegebenenfalls mindestens ein Additiv als Komponente A-3;
B: 0,1 bis 0,5 Gew.-%, bezogen auf die rezyklierte, thermisch stabile Polystyrolzusammensetzung P, mindestens eines sterisch gehinderten phenolischen Antioxidans als Komponente B, ausgewählt aus Octadecyl-3-(3,5-di-tert-butyl-4-hydroxyphenyl)propionat (CAS-Nr.: 2082-79-3), 2,6-Di-tert-butyl-p-kresol (CAS-Nr. 87-97-8) und Mischungen davon; und
C: 0 bis 2 Gew.-%, bezogen auf die rezyklierte, thermisch stabile Polystyrolzusammensetzung P, mindestens eines Additivs als Komponente C.

5. Verfahren zur Erzielung einer höheren thermischen Stabilität bei der mechanischen Rezyklierung von Polystyrol und Verfahren zur Herstellung einer rezyklierten, thermisch stabilen Polystyrolzusammensetzung P, wobei das Verfahren die folgenden Verfahrensschritte umfasst:
(i) Rezyklierung einer aus Kunststoffabfällen gewonnenen Polystyrolzusammensetzung A, die mindestens ein rezykliertes Polystyrol als Komponente A-1 umfasst, das durch eine thermisch initiierte und/oder durch 1,1-Bis(tert-butylperoxy)-3,3,5-trimethylcyclohexan initiierte radikalische Polymerisation erhalten wird;
(ii) Vermischen der rezyklierten Polystyrolzusammensetzung A mit mindestens einem sterisch gehinderten phenolischen Antioxidans als Komponente B und gegebenenfalls mindestens einem weiteren Additiv als Komponente C; und
(iii) Extrudieren der erhaltenen Mischung aus der rezyklierten Polystyrolzusammensetzung A, dem mindestens einen sterisch gehinderten phenolischen Antioxidans B und gegebenenfalls dem mindestens einen weiteren Additiv C.

6. Verfahren nach Anspruch 5, wobei die Polystyrolzusammensetzung A umfasst:
A-1: mindestens ein rezykliertes Polystyrol als Komponente A-1;
A-2: gegebenenfalls mindestens ein schlagzäh-modifizierendes Polymer als Komponente A-2, das Polymerteilchen umfasst, die von mindestens einem Monomer abgeleitet sind, das aus Styrol, 1,3-Butadien, Isopren, Acrylnitril, Ethylen, C₃- bis C₁₂-alpha-Olefinen und Kombinationen davon ausgewählt ist; und
A-3: gegebenenfalls mindestens ein Additiv als Komponente A-3.

7. Verfahren nach Anspruch 5 oder 6, wobei das Polystyrol des rezyklierten Polystyrols A-1 durch ein thermisch initiiertes Radikalpolymerisationsverfahren erhalten wird.

8. Verfahren nach Anspruch 5 oder 6, wobei das Polystyrol des rezyklierten Polystyrols A-1 durch ein radikalisches Polymerisationsverfahren erhalten wird, das durch 1,1-Bis(tert-butylperoxy)-3,3,5-trimethylcyclohexan initiiert wird.

9. Verfahren nach einem der Ansprüche 5 bis 8, wobei das mindestens eine sterisch gehinderte phenolische Antioxidans B ausgewählt ist aus Verbindungen der allgemeinen Formel (I): 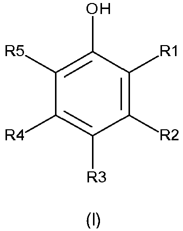 wobei
R1 bis R5 unabhängig voneinander Wasserstoffatome oder Alkylgruppen mit 1 bis 70 Kohlenstoffatomen darstellen, wobei die Kohlenwasserstoffgruppe gegebenenfalls mindestens ein Heteroatom, ausgewählt aus O und S, umfasst, und wobei mindestens einer der Substituenten R1 und R5 eine Kohlenwasserstoffgruppe mit mindestens 3 Kohlenstoffatomen darstellt.

10. Verfahren nach einem der Ansprüche 5 bis 9, wobei das mindestens eine sterisch gehinderte phenolische Antioxidans B ausgewählt ist aus Octadecyl-3-(3,5-di-tert-butyl-4-hydroxyphenyl)propionat (CAS-Nr.2082-79-3), 2,6-Di-tert-butyl-p-cresol (CAS-Nr. 87-97-8), 2-(1,1-Dimethylethyl)-6-[(3-(1,1-dimethylethyl)-2-hydroxy-5-methylphenyl]-methyl-4-methylphenylacrylat (CAS-Nr. 61167-58-6) und Mischungen davon.

11. Verwendung einer rezyklierten, thermisch stabilen Polystyrolzusammensetzung P nach einem der Ansprüche 1 bis 4 als Formteilmaterial in Extrusionsverfahren.

12. Verwendung einer rezyklierten, thermisch stabilen Polystyrolzusammensetzung P, die nach einem Verfahren der Ansprüche 5 bis 10 erhalten wurde, als Formteilmaterial in Extrusionsverfahren.

13. Verwendung nach Anspruch 11 oder 12 als Formteilmaterial in Extrusionsverfahren zur Herstellung von extrudierten Platten.

14. Verfahren zur Herstellung einer rezyklierten, thermisch stabilen Polystyrolzusammensetzung P nach einem der Ansprüche 1 bis 4, wobei die Komponenten A und B und gegebenenfalls C bei einer Temperatur im Bereich von 180 bis 280 °C schmelzvermischt werden.

15. Formteil aus der rezyklierten, thermisch stabilen Polystyrolzusammensetzung P nach einem der Ansprüche 1 bis 4.

## Revendications

1. Composition de polystyrène recyclé thermiquement stable P, comprenant :
A: au moins une composition de polystyrène recyclé en tant que composant A, comprenant
A-1: au moins un polystyrène recyclé en tant que composant A-1, le polystyrène étant obtenu par polymérisation radicalaire initiée thermiquement et/ou par du 1,1-bis(tert-butylperoxy)-3,3,5-triméthylcyclohexane ;
A-2: éventuellement, au moins un polymère modifiant l'impact en tant que composant A-2, comprenant des particules de polymère dérivées d'au moins un monomère choisi parmi le styrène, le 1,3-butadiène, l'isoprène, l'acrylonitrile, l'éthylène, les alpha-oléfines en C₃ à C₁₂, et des combinaisons de ceux-ci ; et
A-3: éventuellement au moins un additif en tant que composant A-3 ;
B: au moins un antioxydant phénolique stériquement encombré en tant que composant B ; et
C: éventuellement au moins un additif en tant que composant C ;
le polystyrène recyclé étant obtenu à partir de déchets de matières plastiques.

2. Composition de polystyrène recyclé thermiquement stable P selon la revendication 1, comprenant ;
A: 95 à 99,9 % en poids, sur la base de la composition de polystyrène recyclé thermiquement stable P, d'au moins un polystyrène recyclé en tant que composant A ;
B: 0,1 à 1 % en poids, sur la base de la composition de polystyrène recyclé thermiquement stable P, d'au moins un antioxydant phénolique stériquement encombré en tant que composant B ; et
C: 0 à 4 % en poids, sur la base de la composition de polystyrène recyclé thermiquement stable P, d'au moins un additif en tant que composant C.

3. Composition de polystyrène recyclé thermiquement stable P selon la revendication 1 ou 2, comprenant en tant que composant B :
0,1 à 0,5 % en poids, sur la base de la composition de polystyrène recyclé thermiquement stable P, d'au moins un antioxydant phénolique stériquement encombré est choisi parmi les composés de la formule générale (I) : 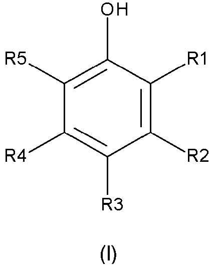 dans lequel R1 à R5 représentent indépendamment des atomes d'hydrogène ou des groupes d'alkyle ayant de 1 à 70 atomes de carbone, dans lequel le groupe d'hydrocarbures comprend éventuellement au moins un hétéroatome choisi parmi O et S, et dans lequel au moins un des substituants R1 et R5 représente un groupe d'hydrocarbures ayant au moins 3 atomes de carbone.

4. Composition de polystyrène recyclé thermiquement stable P selon l'une des revendications 1 à 3, comprenant :
A: 97,5 à 99,9 % en poids, sur la base de la composition de polystyrène recyclé thermiquement stable P, d'au moins un polystyrène recyclé en tant que composant A, comprenant :
A-1: au moins un polystyrène recyclé en tant que composant A-1, le polystyrène recyclé A-1 étant préparé par polymérisation radicalaire initiée thermiquement ;
A-2: au moins un polymère modifiant l'impact A-2 en tant que composant A-2, comprenant des particules de polymère dérivées d'au moins un monomère choisi parmi le styrène, le 1,3-butadiène, l'isoprène, l'acrylonitrile, l'éthylène, les alpha-oléfines en C₃ à C₁₂, et des combinaisons de ceux-ci ; et
A-3: éventuellement au moins un additif en tant que composant A-3 ;
B: 0,1 à 0,5 % en poids, sur la base de la composition de polystyrène recyclé thermiquement stable P, d'au moins un antioxydant phénolique stériquement encombré en tant que composant B, choisi parmi le 3-(3,5-di-tert-butyl-4-hydroxyphényl)propionate d'octadécyle (n° CAS : 2082-79-3), le 2,6-di-tert-butyl-p-crésol (n° CAS : 87-97-8), et leurs mélanges ; et
C: 0 à 2 % en poids, sur la base de la composition de polystyrène recyclé thermiquement stable P, d'au moins un additif en tant que composant C.

5. Procédé permettant d'obtenir une stabilité thermique supérieure lors du recyclage mécanique du polystyrène, et procédé permettant d'obtenir une composition de polystyrène P recyclée et thermiquement stable, dans lequel le procédé comprend les étapes suivantes :
(i) recyclage d'une composition de polystyrène A obtenue à partir de déchets de matières plastiques, comprenant au moins un polystyrène recyclé en tant que composant A-1, qui est obtenu par une polymérisation radicalaire initiée thermiquement et/ou par du 1,1-bis(tert-butylperoxy)-3,3,5-triméthylcyclohexane ;
(ii) mélange de la composition de polystyrène recyclé A avec au moins un antioxydant phénolique stériquement encombré en tant que composant B et éventuellement au moins un autre additif en tant que composant C ; et
(iii) extrusion du mélange obtenu de la composition de polystyrène recyclé A, d'au moins un antioxydant phénolique stériquement encombré B et éventuellement d'au moins un autre additif C.

6. Procédé selon la revendication 5, dans lequel la composition de polystyrène A comprend :
A-1: au moins un polystyrène recyclé en tant que composant A-1 ;
A-2: éventuellement, au moins un polymère modifiant l'impact en tant que composant A-2, comprenant des particules de polymère dérivées d'au moins un monomère choisi parmi le styrène, le 1,3-butadiène, l'isoprène, l'acrylonitrile, l'éthylène, les alpha-oléfines en C₃ à C₁₂, et des combinaisons de ceux-ci ; et
A-3: éventuellement au moins un additif en tant que composant A-3.

7. Procédé selon la revendication 5 ou 6, dans lequel le polystyrène du polystyrène recyclé A-1 est obtenu par un procédé de polymérisation radicalaire initié thermiquement.

8. Procédé selon la revendication 5 ou 6, dans lequel le polystyrène du polystyrène recyclé A-1 est obtenu par un procédé de polymérisation radicalaire initié par le 1,1-bis(tert-butylperoxy)-3,3,5-triméthylcyclohexane.

9. Procédé selon l'une des revendications 5 à 8, dans lequel l'au moins un antioxydant phénolique stériquement encombré B est choisi parmi les composés de la formule générale (I) : 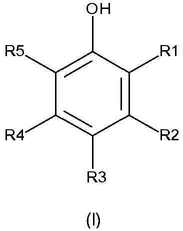 dans lequel
R1 à R5 représentent indépendamment des atomes d'hydrogène ou des groupes d'alkyle ayant de 1 à 70 atomes de carbone, dans lequel le groupe d'hydrocarbures comprend éventuellement au moins un hétéroatome choisi parmi O et S, et dans lequel au moins un des substituants R1 et R5 représente un groupe d'hydrocarbures ayant au moins 3 atomes de carbone.

10. Procédé selon l'une des revendications 5 à 9, dans lequel l'au moins un antioxydant phénolique stériquement encombré B est choisi parmi le 3-(3,5-di-tert-butyl-4-hydroxyphényl)propionate d'octadécyle (CAS-No.2082-79-3), 2,6-di-tert-butyl-p-crésol (CAS-No. 87-97-8), 2-(1,1-diméthyléthyl)-6-[(3-(1,1-diméthyléthyl)-2-hydroxy-5-méthylphényl]-méthyl-4-méthylphényl acrylate (CAS-No. 61167-58-6), et leurs mélanges.

11. Utilisation d'une composition de polystyrène recyclé thermiquement stable P selon l'une des revendications 1 à 4 en tant que matériau de pièce moulée dans des procédés d'extrusion.

12. Utilisation d'une composition de polystyrène recyclé thermiquement stable P, obtenue selon un procédé des revendications 5 à 10, en tant que matériau de pièce moulée dans des procédés d'extrusion.

13. Utilisation selon la revendication 11 ou 12 en tant que matériau de pièce moulée dans des procédés d'extrusion pour la fabrication de feuilles extrudées.

14. Procédé de préparation d'une composition de polystyrène recyclé thermiquement stable P selon l'une des revendications 1 à 4, dans lequel les composants A et B, et éventuellement C, sont mélangés par fusion à une température comprise entre 180 et 280 °C.

15. Pièce moulée fabriquée à partir de la composition de polystyrène recyclé thermiquement stable P selon l'une des revendications 1 à 4.
